# EUROPEAN PATENT APPLICATION

(11) **EP 0 593 120 A1**
(43) Date of publication of application: **20.04.1994**
(21) Application number: 93202837.6
(22) Date of filing: 06.10.1993
(51) Int. Cl.: H04M 1/68, H04M 1/70

(54) **Device for detecting the activation of a parallel connected telephone set**

(30) Priority: 14.10.1992 EP 92203159
(71) Applicant: Philips Electronics N.V., 5621 BA Eindhoven (NL)
(72) Inventor: Sattler, Peter, c/o INT. OCTROOIBUREAU B.V., NL-5656 AA Eindhoven (NL); Krawtchenko, Viktor c/o Int. Octrooibureau B.V., NL-5656 AA Eindhoven (NL)
(74) Representative: Evers, Johannes Hubertus Maria

(57) **Abstract**

A very simple device is described for detecting the activation of a parallel connected telephone set, when two or more telephone sets are coupled in parallel to the telephone lines and one of this telephone sets already active. A warning that such a second, parallel connected telephone set is activated is provided by detecting the voltage variation over a resistance in the DC-path of the speech circuit of the already active telephone set when said second telephone set goes off-hook.

## Description

The invention relates to a device in a first telephone set for the detection of the activation of a second telephone set, in the situation that both telephone sets are coupled in parallel to a pair of telephone lines.

Such a device for example is described in Japanese patent application 64-138487, which describes a circuit for detecting the activation of a parallel connected telephone set by measuring the line voltage before and after the activation of a parallel connected telephone set and by comparing these values with predetermined values. Further US-A-4,723,279 describes a circuit for detecting a change in the line voltage due to the activation of a telephone set, by which change a transistor is made conductive and a LED is switched on to give other users of a parallel connected telephone set an indication that the line is occupied.

The device according to the said US Patent in fact does not detect the activation of a parallel connected telephone set, but, by activating a LED, warns the possible users of the others of the parallel connected telephone set(s) about this fact. The device as described in the Japanese application has the disadvantage that a comparison with predetermined voltage values takes place. Due to the different DC-supplies of different central telephone offices and due to the different resistance values of telephone lines it is very difficult to predetermine such absolute voltage values in advance and under certain circumstances it even is possible that an overlap takes place between the voltage value for normal operation and that for operation when a second parallel telephone set is activated.

The invention aims to provide a circuit for the detection of the activation of a parallel connected telephone set, which is of a very simple construction and which gives a reliable indication of the activation of a parallel connected telephone set, independent of the actual line voltage at the connection of the parallel connected telephone sets to the telephone lines.

To this effect the device according to the invention is characterized in that the first telephone set comprises a speech circuit to be connected between the telephone lines, the speech circuit comprising a DC-path with at least one resistor and an AC-path; that the detection device is coupled to the DC-path of the speech circuit and comprises means to detect a voltage variation over the resistor thereof due to the activation of the second telephone set and to provide a detection signal.

According to a preferred embodiment the device is characterized by a differential amplifier, the non-inverting input of which is directly coupled to the resistor over which the voltage variation is detected and the inverting input of which is coupled to that resistor by means of a voltage divider in order to receive a fraction of said voltage variation, and by a storage element which is coupled to said inverting input to maintain the voltage at the inverting input for a predetermined period at a previous value when the voltage over the resistor varies.

The invention also is directed to a telephone set characterized by a speech circuit to be connected between a pair of telephone lines and comprising a DC-path with at least one resistor and an AC-path; a microphone and a loudspeaker which are coupled to the AC-path; and by a detection device which is coupled to the DC-path of the speech circuit and comprises means to detect a voltage variation over the resistor thereof and to provide a detection signal, which signal is indicative of the activation of a further telephone set which is connected in parallel with the first mentioned telephone set to the telephone lines.

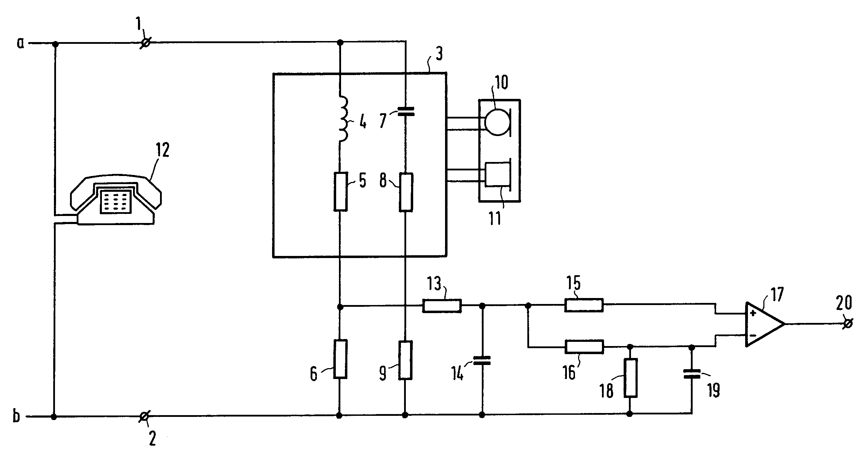

The invention in the following shall be described at the hand of the drawing in which the figure shows a schematic block diagram of an embodiment of the invention.

The figure schematically shows a conventional electronic telephone set comprising terminals 1 and 2 for connection to the telephone lines, as usual indicated by a and b, or tip and ring lines. The terminals 1 and 2 are coupled to a speech circuit 3, which nowadays always is in the form of an integrated circuit, such as the integrated circuits of the TEA 1060 series of Philips. For the sake of simplicity only the AC- and DC-path through the speech circuit 3 are shown in a very schematical way. The figure of course only shows those parts of a telephone set that are necessary for a proper understanding of the present invention. Modern electronic telephone sets are much more complicated then shown in the figure, but at the hand of the following description it will be clear to those skilled in the art how to implement the invention in such a telephone set.

The DC-path comprises an inductor 4, a resistor 5 and a resistor 6, which are connected in series between the telephone lines a and b and of which the resistor 6 is external of the circuit 3. The AC-path comprises a capacitor 7, a resistor 8 and a resistor 9, which components are connected in series between the telephone lines a and b and of which the resistor 9 is external to the circuit 3. To the speech circuit in a conventional way a handset comprising a microphone 10 and a loudspeaker 11 is connected.

In parallel to the resistor 6 of the DC-path the circuit according to the invention for detecting the activation, i.e the going of hook, of a schematically shown telephone set 12, that is connected in parallel to the telephone lines a and b, is shown. This circuit comprises a low pass filter comprising a resistor 13 and a capacitor 14, which are connected to each other by their first terminals, the second terminal of the resistor being connected to the terminal of resistor 6 that is connected to the speech circuit 3 and the second terminal of the capacitor 14 being connected to the terminal of resistor 6 that is coupled to the terminal 2 for the telephone line.

To the junction of the resistor 13 and the capacitor 14 the first terminals of resistors 15 and 16 are connected. The second terminal of resistor 15 is connected to the non-inverting input of a differential amplifier 17. The second terminal of resistor 16 is connected to the inverting input of the differential amplifier 17, this input by means of the parallel connection of a resistor 18 and a capacitor 19 also being connected to the terminal 2 for the telephone line. The output of the differential amplifier 17, in a way to be described in the following, provides a signal that is representative for the activation of the telephone set 12 that is connected in parallel to the telephone lines a and b.

The circuit as shown in the figure functions as follows: The voltage over the resistor 6 is representative for the line current that flows through the phone circuit 3. When the second telephone set 12, that is connected in parallel to the lines a and b, is activated, i.e. goes off hook, this results in a change in the current through the circuit 3 and therefore in a change in the voltage over resistor 6. The low-pass filter circuit comprising the resistor 13 and the capacitor 14 serves to filter out noise and minor variations in the voltage over resistor 6.

In the normal situation, when only one telephone set is activated, the voltage at the non-inverting input of the amplifier 17 is higher than that on the inverting input, due to the voltage division caused by the resistors 16 and 18. At the same time the capacitor 19 is loaded to the voltage that is present at the inverting terminal of the amplifier 17.

When the second telephone set 12 goes off-hook, this results in a decrease in the current through resistor 6, due to the new DC-resistance as seen by the central telephone office. Accordingly, the voltages at both inputs of the differential amplifier 17 also change, but the voltage at the non-inverting input follows this voltage change immediately, while the voltage change at the inverting input only takes place gradually, depending on the time constant as determined by the resistor 18 and the capacitor 19. Therefore the voltage at the inverting input is higher than that at the non-inverting input for some time and the output signal at the output terminal 20 of the amplifier 17, which in the steady state is high, becomes low.

Of course the values of the resistors 16 and 18 have been chosen in such a way that each voltage variation that possibly can occur when a parallel telephone set is activated, independent of line voltages and the line resistance 5 results in dropping of the voltage at the non-inverting input below the voltage present at the inverting input before the parallel telephone set was activated.

The duration of this low output signal of the amplifier 17 is determined by the time constant of resistor 18 and capacitor 19. After the capacitor 19 has been discharged sufficiently, so that the voltage value at the inverting input, due to the voltage division by the resistors 16 and 18, drops below that at the non-inverting input, the output of the amplifier 17 becomes high again. During the time that the output signal of amplifier 17 is low, this low signal can be used to generate a warning signal in the loudspeaker of the handset, or to activate a LED, or to activate any other means to warn the user of the telephone set that has been activated first, that a parallel connected set has been activated.

Because in accordance with the invention no absolute values of line currents and/or voltages are measured, but only changes in a voltage in comparison with a normal situation with only one telephone set activated, the circuit according to the invention functions in a reliable way, fully independent of the actual line voltages and -currents and besides of that has a very simple configuration, comprising only a few components.

## Claims

1. Device in a first telephone set for the detection of the activation of a second telephone set, in the situation that both telephone sets are coupled in parallel to a pair of telephone lines, characterized in that the first telephone set comprises a speech circuit to be connected between the telephone lines, the speech circuit comprising a DC-path with at least one resistor and an AC-path; that the detection device is coupled to the DC-path of the speech circuit and comprises means to detect a voltage variation over the resistor thereof due to the activation of the second telephone set and to provide a detection signal.

2. Device according to claim 1, characterized by a differential amplifier, the non-inverting input of which is directly coupled to the resistor over which the voltage variation is detected and the inverting input of which is coupled to that resistor by means of a voltage divider in order to receive a fraction of said voltage variation, and by a storage element which is coupled to the inverting input to maintain the voltage at the inverting input for a predetermined period at a previous value when the voltage over the resistor varies.

3. Device according to claim 2, characterized by a low-pass filter circuit that is coupled between the resistor and the inputs of the differential amplifiers.

4. Telephone set characterized by a speech circuit to be connected between a pair of telephone lines and comprising a DC-path with at least one resistor and an AC-path; a microphone and a loudspeaker which are coupled to the AC-path; and by a detection device which is coupled to the DC-path of the speech circuit and comprises means to detect a voltage variation over the resistor thereof and to provide a detection signal, which signal is indicative of the activation of a further telephone set which is connected in parallel with the first mentioned telephone set to the telephone lines.

5. Telephone set according to claim 4, characterized in that the detection device comprises a differential amplifier, the non-inverting input of which is directly coupled to the resistor of the DC-path over which the voltage variation is detected and the inverting input of which is coupled to that resistor by means of a voltage divider in order to receive a fraction of said voltage variation, and by a storage element to maintain the voltage at the inverting input for a predetermined period at a previous value when the voltage over the resistor varies.

6. Telephone set according to claim 4 or 5, characterized in that the detection signal is made audible in the telephone.
